(19) Europäisches Patentamt
European Patent Office
Office européen des brevets

(11) **EP 2 294 441 B1**

(12) **FASCICULE DE BREVET EUROPEEN**

(45) Date de publication et mention
de la délivrance du brevet:
**22.02.2012 Bulletin 2012/08**

(21) Numéro de dépôt: **09793898.9**

(22) Date de dépôt: **05.06.2009**

(51) Int Cl.:
***G01S 3/786*** *(2006.01)*     ***G06T 7/00*** *(2006.01)*

(86) Numéro de dépôt international:
**PCT/EP2009/056908**

(87) Numéro de publication internationale:
**WO 2010/003742 (14.01.2010 Gazette 2010/02)**

(54) **PROCEDE DE DETECTION D'UN OBJET DANS UNE SCENE COMPORTANT DES ARTEFACTS**

VERFAHREN ZUR ERKENNUNG EINES OBJEKTS IN EINER SZENE MIT ARTEFAKTEN

METHOD OF DETECTING AN OBJECT IN A SCENE COMPRISING ARTEFACTS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **06.06.2008 FR 0803167**

(43) Date de publication de la demande:
**16.03.2011 Bulletin 2011/11**

(73) Titulaire: **THALES**
**92200 Neuilly-sur-Seine (FR)**

(72) Inventeurs:
• **DUFOUR, Jean-Yves**
  **F-78180 Montigny Le Bretonnneux (FR)**
• **PRENAT, Michel**
  **F-92100 Boulogne (FR)**
• **LEMPERIERE, Nadège**
  **92130 Issy Les Moulineaux (FR)**

(74) Mandataire: **Henriot, Marie-Pierre et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-89/12371**    **WO-A-03/029876**
**WO-A-03/067884**    **FR-A- 2 875 626**
**GB-A- 2 330 028**    **US-A- 5 210 798**
**US-A- 5 379 044**

EP 2 294 441 B1

**Description**

Le domaine de l'invention est celui des systèmes optroniques de surveillance.

Un système optronique de surveillance a pour fonction de détecter et suivre des cibles pénétrant dans une zone de surveillance.

Le problème crucial de la détection de cible (ou objet) dans une séquence vidéo est de trouver un critère désigné « critère de détection » qui permette de décider pour chaque image comportant des pixels, quels sont les pixels d'une cible. Le choix de ce critère conduit à des performances de détection définies en fonction du couple probabilité de détection - probabilité de fausse alarme.

On rappelle que la probabilité de détection est la probabilité pour un pixel d'une cible (ou objet menaçant) d'être considéré comme probablement celui d'une cible ; la probabilité de fausse alarme est la probabilité pour un pixel d'un objet non menaçant d'être sélectionné comme étant probablement celui d'une cible.

Dans les systèmes de surveillance de cibles aériennes, on utilise généralement des images acquises dans les longueurs d'onde de l'infrarouge car elles offrent un bon critère de détection dans la mesure où la plupart des cibles sont propulsées et fournissent donc un signal IR élevé.

Pour un système de surveillance air-air à longue portée, la détection consiste à discriminer avec une forte probabilité de détection et une faible probabilité de fausse alarme, un pixel pouvant présenter un faible rapport signal sur bruit (RSB), tel qu'un pixel dont le signal « cible» est faible comparé aux signaux des pixels d'arrière-plan.

Les principales sources de fausses alarmes sont :

- des échantillons de bruit sur les pixels de l'arrière-plan de la cible qui produisent un signal additionnel comparable dans certains cas à celui d'une cible,
- des artefacts variant rapidement dans l'arrière-plan qui produisent un signal très important (reflets du soleil à la lisière des nuages par exemple).

Les systèmes considérés sont plus particulièrement les systèmes de surveillance à balayage basse fréquence fonctionnant avec un dispositif d'acquisition haute fréquence. Parmi ceux-ci on peut citer les systèmes décrits dans le document GB 2330028 qui présente un système d'identification de la trajectoire d'une cible dans des images parasitées, et dans le document US 5210798 qui présente un système de détection d'une cible à faible RSB.

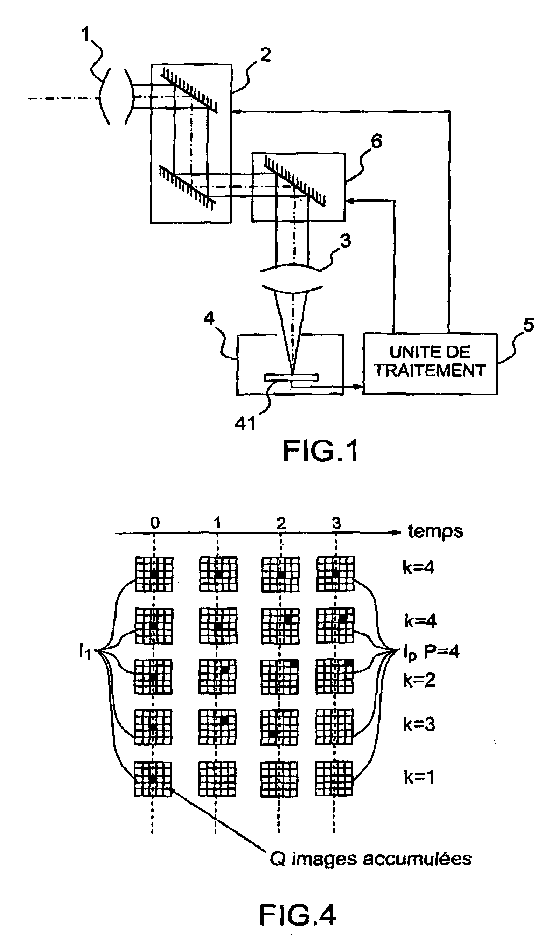

La figure 1 illustre un exemple de système de surveillance connu, comportant des moyens de balayage permettant d'analyser de préférence de façon répétitive, un secteur S de l'espace. Ce système comprend une optique frontale 1 de champ instantané « a x b » et des moyens de balayage 2 permettant l'observation du secteur S avec un champ total donné « A x B ». Les moyens de balayage sont contrôlés par une unité de traitement, permettant le balayage du secteur. Le système de surveillance comprend en outre des moyens de formation d'image 3 sur les pixels du détecteur matriciel 41 compris dans des moyens de détection 4. Il s'agit de l'image d'une scène située dans une zone de champ donné « a x b », située dans le secteur S. Le système peut comprendre aussi des moyens de contre-balayage 6 permettant de compenser les mouvements de l'image dus au balayage de la scène pendant l'acquisition des images. Par exemple l'unité de traitement 5 peut synchroniser l'acquisition des images avec le balayage par des moyens de contre-balayage.

Sur ces systèmes, le détecteur matriciel 41 couvre un bandeau de l'espace (de dimension « A x b ») par rotation des moyens de balayage 2. Dans ce cas, un point du secteur S n'est pas observé de façon permanente, mais avec une période plus ou moins courte selon le temps mis pour revenir sur ce point après avoir balayé l'ensemble du secteur S. Des moyens de contre-balayage 6 permettent : d'une part, d'assurer la stabilité de la ligne de visée pendant le temps d'intégration du détecteur matriciel 41 pour chaque image, d'autre part, d'observer la même zone « a x b » de l'espace (de dimension sensiblement égale au champ instantané du détecteur matriciel 41, ou éventuellement inférieure à celui-ci) tant que les moyens de balayage 2 du secteur ne nécessitent pas le passage à la zone suivante. En général, les moyens de balayage / contre-balayage 2, 6 assurent un certain recouvrement entre deux zones consécutives observées, pour éliminer le risque de formation de zones 'aveugles' dues à des erreurs dans les mécanismes, et pour traiter sans difficulté supplémentaire ie cas des cibles qui se déplacent dans le repère du détecteur matriciel.

Selon la fréquence d'acquisition des images et la vitesse de rotation des moyens de balayage, un certain nombre d'images de la même zone est donc obtenu (avec la même direction de visée).

Ces systèmes de surveillance sont caractérisés par :

- un délai important (pouvant atteindre plusieurs secondes) entre deux observations consécutives de la même zone lors de deux analyses successives du secteur S,
- un grand nombre N (de l'ordre de plusieurs dizaines) d'acquisitions d'images du même objet (ou cible) d'une scène à chaque balayage : N images consécutives incluent alors le même objet.

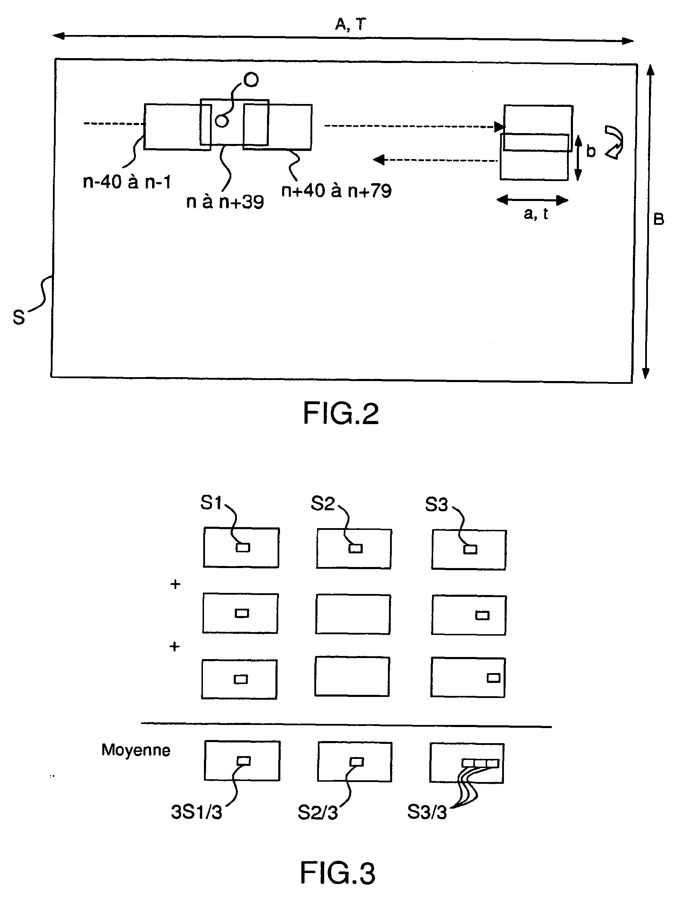

On a illustré ce procédé figure 2 avec les valeurs suivantes :

Le secteur S d'un champ représenté par un angle A x B est balayé sur sa largeur A en T secondes, soit à une vitesse angulaire θ', par exemple 20° en 2 s, soit θ' = A/T = 10° s$^{-1}$.

Soit a la largeur angulaire du champ instantané du détecteur matriciel ; le temps consacré à l'acquisition des images d'une scène couvrant une largeur angulaire « a » est égal au temps nécessaire pour balayer cette largeur à la vitesse angulaire θ', soit t = a / θ', par exemple pour a = 1° et θ' = 10° s$^{-1}$, t = 0.1 s.

Le terme largeur angulaire n'est pas limité à une orientation dans l'espace.

Soit f la cadence d'échantillonnage du détecteur matriciel (cadence image), par exemple f = 400 Hz, soit une période d'échantillonnage $t_e$ = 1/f = 2.5 ms.

Alors le nombre N d'images consacrées à la même zone angulaire est égal à N = t / $t_e$ = a f / θ', soit N = 40.

Sur la figure et pour ne pas la surcharger, un objet ponctuel O est donc présent dans 40 images consécutives, numérotées de n à n+39. Cet objet n'est pas présent dans les 40 images précédentes (numérotées de n-40 à n-1) ni dans les 40 images suivantes (numérotées de n+40 à n+79).

Le problème est d'optimiser l'usage de ces N images pour détecter l'objet avec une forte probabilité de détection et éliminer le plus possible de fausses alarmes dues notamment à des artefacts.

L'invention a pour objet un procédé de détection d'un objet dans une scène située dans un secteur angulaire S déterminé, et susceptible de comporter un ou plusieurs artéfacts (signaux de l'arrière-plan de forte amplitude et variant rapidement), qui comprend une étape de balayage du secteur dans sa largeur angulaire A à une vitesse angulaire θ', une étape d'acquisition d'images numériques consécutives de la scène à une fréquence f, ces images comportant des pixels et couvrant un champ 'instantané' de largeur angulaire « a ». Il est principalement caractérisé en ce qu'il comprend les étapes suivantes de traitement des images acquises, par lot de N images avec N = a f / θ' :

- répartir les N images en P groupes d'images, P étant un entier supérieur à 1,
- pour chaque groupe p, p compris entre 1 et P, accumuler les images du groupe de manière à obtenir une image accumulée $I_p$ incluant le pixel objet,
- pour chaque image $I_p$, sélectionner les pixels qui vérifient un critère de détection déterminé,
- pour chaque image $I_p$ comportant au moins un pixel sélectionné, dite image de départ de confirmation, effectuer une étape de confirmation temporelle qui comprend les sous-étapes suivantes :

   appliquer un critère de confirmation temporelle en comparant à un nombre prédéterminé K avec K<= P, le nombre k de fois que ce pixel sélectionné dans l'image de départ ou l'un de ses voisins a été sélectionné dans les images $I_p$ suivantes, le pixel sélectionné dans l'image de départ étant compté dans k : ce pixel sera considéré comme celui d'un objet si k ≥ k,
   réitérer ce critère de confirmation temporelle pour tous les pixels sélectionnés de cette image de départ dans la mesure où ces pixels n'ont pas déjà été pris en compte dans un calcul de k.

Ce procédé permet :

- de prendre en compte dans le critère de confirmation temporelle, le déplacement potentiel de l'objet dans des pixels voisins sélectionnés, ce déplacement étant dû au déplacement angulaire de la cible dans le repère du capteur et pendant le temps d'acquisition des N images,
- d'augmenter les performances d'élimination des artéfacts car d'une part ceux-ci n'ont pas plus de poids que les cibles lors de l'application du critère de confirmation temporelle et que d'autre part les cibles ayant une corrélation temporelle supérieure à celle des artéfacts, l'application du critère élimine les artéfacts sans affaiblir la détection des cibles.

Par le critère de confirmation temporelle, le procédé permet également de rejeter les cibles dont le déplacement angulaire est trop rapide, comme par exemple un objet qui ne constitue pas une menace et qui ne peut être détecté qu'à courte distance, tel un oiseau. En effet, le nombre d'images de chaque groupe est déterminé de manière à ce que le pixel objet ne présente pas de changement de pixel entre les images du groupe.

Plus précisément selon une caractéristique de l'invention, le nombre d'images de chaque groupe p est déterminé en fonction de la vitesse angulaire supposée de la cible, de la taille $θ_p$ de l'angle de visée du pixel et de la cadence image f et éventuellement en fonction de N.

K est typiquement déterminé en fonction de la durée supposée de présence des artéfacts et de la cadence image f.

Selon une caractéristique de l'invention P est déterminé en fonction de N et du nombre d'images de chaque groupe.

De préférence, un pixel est sélectionné lorsque RSB > seuil prédéterminé dans ce pixel.

Selon une autre caractéristique de l'invention, un pixel voisin est déterminé en fonction des déplacements admissibles de l'objet, d'une image $I_p$ à l'autre, et/ou en fonction d'une trajectoire de pixels admissible.

Lorsque l'image d'un objet couvre plus d'un pixel, le procédé comprend avant l'étape de répartition des N images en P groupes, une étape de changement de l'échelle des pixels c'est-à-dire qu'un bloc de q x q anciens pixels devient un nouveau pixel, q étant un entier supérieur ou égal à 2, de manière à ce que l'image d'un objet ne couvre qu'un pixel.

La vitesse angulaire θ' n'est pas nécessairement constante. L'invention a aussi pour objet un système de surveillance d'un secteur S qui comporte :

- des moyens de balayage du secteur S dont la largeur angulaire A est balayée à une vitesse angulaire θ',
- des moyens de formation d'images de scènes situées dans ledit secteur S et susceptibles de comporter des artéfacts,
- des moyens de détection d'images numériques d'une scène, à une cadence f comprenant un détecteur matriciel présentant un ensemble de pixels,
- une unité de traitement des images détectées,

caractérisé en ce que l'unité de traitement comprend des moyens de mise en oeuvre du procédé tel que décrit.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement un système de surveillance selon l'état de la technique,
la figure 2 déjà décrite illustre un procédé de surveillance à balayage basse fréquence avec une acquisition haute fréquence, selon l'état de la technique,
la figure 3 illustre le problème posé par des artefacts,
la figure 4 illustre des exemples de calcul de k,
la figure 5 illustre différentes étapes d'un exemple de déroulement du procédé selon l'invention.

D'une figure à l'autre, les mêmes éléments sont repérés par les mêmes références.

On va tout d'abord analyser plus en détail le problème posé par les artefacts.

Pour une image acquise, le signal s'exprime de la façon suivante selon qu'une cible est présente ou non dans le pixel correspondant et en cas de présence d'un artefact éphémère.

$$S_{menace} = S_{cible} + S_{arrière-plan} + S_{bruit}$$

$$S_{sans-menace} = S_{arrière-plan} + S_{bruit}$$

$$S_{quick\_clutter} = S_{artefact} + S_{arrière-plan} + S_{bruit}$$

où $S_{cible}$ est le signal de la cible,
$S_{arrière-plan}$ le signal de l'arrière-plan du pixel (appelé aussi le fond),
$S_{bruit}$ un échantillon aléatoire du bruit du capteur,
$S_{artefact}$ le signal de l'artefact qui n'apparaît que dans quelques images consécutives,
$S_{quick-dutter}$ le signal bruité de l'artefact.

On a : $S_{artefact} \gg S_{cible}$ et $S_{artefact} \gg S_{bruit}$

Un pistage ultérieur est basé sur une association temporelle des cibles détectées à chaque balayage du secteur. En raison du délai, qui peut être important, entre deux observations consécutives de la même zone lors de deux analyses successives du secteur S, un objet mobile présente d'une image (en fait d'un groupe d'images accumulées) à l'autre un déplacement angulaire qui peut être important et qui nécessite donc une large zone de recherche pour réaliser l'association temporelle, ce qui augmente les risques d'association ambiguë.

Le problème est donc d'optimiser l'usage des N images proches temporellement pour détecter la cible avec une forte probabilité de détection et éliminer le plus possible de fausses alarmes, afin de réduire la probabilité de mauvaises associations en vue d'un pistage ultérieur.

On rappelle que N=af/θ'. Selon l'invention, la vitesse angulaire θ' n'est pas nécessairement constante.

L'accumulation des N images permettrait d'augmenter le S/B. Pour une cible fixe, l'intensité moyenne d'un pixel issu de cette accumulation suivie d'une division par N est donnée par les équations :

$$S_{menace\_acc} = S_{cible} + S_{arrière-plan} + S_{bruit\_acc}$$

$$S_{sans-menace\_acc} = S_{arrière-plan} + S_{bruit\_acc}$$

$$S_{quick\_clutter\_acc} = \frac{S_{artefact}}{N} + S_{arrière-plan} + S_{bruit\_acc}$$

dans le cas où l'artefact n'est présent que dans une image, et où $S_{bruit\_acc}$ est un bruit qui a un écart-type égal à $\frac{\sigma}{\sqrt{N}}$,

où $\sigma$ est l'écart-type du bruit pour une image donnée.

Cette solution optimise l'élimination des fausses alarmes dues au bruit. Mais dans le cas d'une cible mobile qui peut changer de pixels pendant l'acquisition des N images, le signal résultant peut devenir dilué entre des pixels adjacents. Le bruit est réduit mais celui de la cible l'est aussi alors que le signal de l'arrière-plan ne change pas. Par exemple, pour une cible qui change de pixel à chaque image, on a :

$$S_{cible-mobile\_acc} = \frac{S_{cible}}{N} + S_{arrière-plan} + S_{bruit\_acc}$$

On va détailler ceci sur un exemple illustré figure 3 en considérant 3 cas différents, un cas par colonne. Les 3 premières lignes correspondent à des instants consécutifs, la dernière représentant la moyenne sur les 3 instants considérés. Chaque image I de ce tableau résulte d'une accumulation de Q images. On a pour l'image moyenne de :

- la cible fixe (1ère colonne) : 3 $S_1$/3 = $S_1$,
- l'artefact (2è colonne) : $S_2$/3,
- la cible à mouvement lent (3è colonne) : $S_3$/3, $S_3$/3, $S_3$/3.

En outre, les hauts artefacts qui arrivent ponctuellement dans une seule image peuvent aboutir à un signal accumulé supérieur à celui d'une cible peu mobile. En d'autres termes, $\frac{S_{artefact}}{N}$ peut être supérieur à $S_{cible}$, soit dans notre exemple $S_2$/3 >>$S_1$.

Une solution connue pour résoudre ce problème de cible mobile consiste à appliquer la méthode « poursuite avant détection » ou « track before detect method » en anglais. Pour chaque pixel, sont faites M hypothèses de trajectoires. Pour chacune de ces hypothèses, les positions de la cible déduites au cours du temps sont accumulées. L'hypothèse retenue est l'hypothèse de trajectoire qui maximise le signal accumulé.

Cette solution traite efficacement le problème d'une cible se déplaçant: on obtient le même signal accumulé que celui que l'on obtiendrait pour une cible fixe. Mais chaque hypothèse de trajectoire peut mener à une fausse alarme sur des pixels d'arrière-plan par accumulation d'échantillons de bruit : la probabilité résultante de fausse d'alarme est alors supérieure à la probabilité de fausse d'alarme que l'on aurait obtenue par le procédé classique d'accumulation d'images. De plus, comme indiqué plus haut, les hauts artefacts qui arrivent ponctuellement dans une seule image peuvent aboutir à un signal accumulé supérieur à celui d'une cible peu mobile. En d'autres termes, $\frac{S_{artefact}}{N}$ peut être supérieur à $S_{cible}$, soit dans notre exemple $S_2$/3 >>$S_1$.

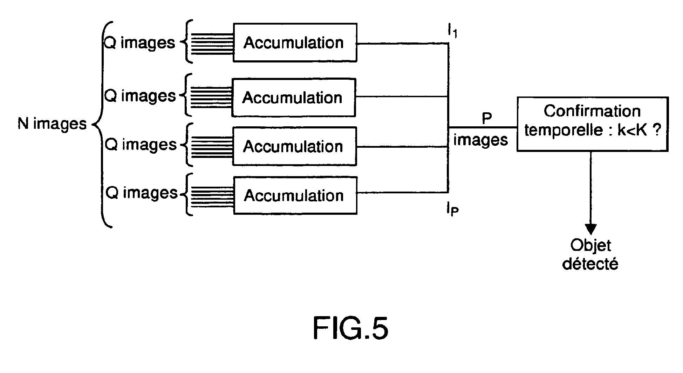

Le procédé selon l'invention décrit en relation avec les figures 4 et 5 est basé sur une répartition des N images en P groupes d'images.

Le nombre Q d'images par groupe est déterminé de manière à ce que la cible ne présente pas de changement de pixel entre les Q images. Les P groupes d'images sont ensuite utilisés de la façon suivante :

- pour chaque groupe, accumuler les Q images de manière à obtenir une image accumulée $I_1$, ..., $I_p$, ..., $I_p$,
- pour chaque image $I_p$, sélectionner les pixels qui vérifient un critère de détection déterminé; ce critère peut être tel qu'un pixel est sélectionné lorsque le RSB dans ce pixel est supérieur à un seuil prédéterminé (il s'agit du RSB auquel on a accès, qui est en général un RSB estimé), ou tel que le signal du pixel est supérieur à un autre seuil prédéterminé,
- pour chaque image $I_p$ comportant au moins un pixel sélectionné, dite image de départ de confirmation, effectuer une étape de confirmation temporelle qui comprend les sous-étapes suivantes :

    appliquer un critère de confirmation temporelle en comparant à un nombre prédéterminé K (on a K<= P), le nombre k de fois que ce pixel sélectionné dans l'image de départ ou l'un de ses voisins a été sélectionné dans les images $I_p$ suivantes, le pixel sélectionné dans l'image de départ étant compté dans k : ce pixel sera considéré comme celui d'un objet si $k \geq K$,
    réitérer ce critère de confirmation temporelle pour tous les pixels sélectionnés de cette image de départ dans la mesure où ces pixels n'ont pas déjà été pris en compte dans un calcul de k.

Comme indiqué plus haut, Q est déterminé de manière à ce que la cible ne présente pas de changement de pixel entre les Q images.

Les variables Q et K sont déterminées de la façon suivante.

Q est déterminé de manière à ce que le pixel objet ne présente pas de changement de pixel entre les Q images. Plus précisément, Q est déterminé en fonction de la vitesse angulaire supposée de la cible, de la taille du pixel en angle et de la cadence image. Si le détecteur matriciel comprend C colonnes et L lignes, la taille $\theta_p$ de l'angle de visée du pixel est égale à :

$$(a/C) \times (b/L).$$

Précisément, soit $\omega'_c$ la vitesse de défilement angulaire de la cible, $\theta_p$ la taille angulaire d'un pixel et $t_e$ la période image, alors on doit avoir :

$$\omega'_c \times Q \times t_e \leq \theta_p .$$

Pour donner des ordres de grandeur, si la cible est à une distance de 100 kilomètres et se déplace à 300 ms$^{-1}$ perpendiculairement à la ligne capteur-cible, la vitesse de déplacement angulaire est $\omega'_c$ = 3.10$^{-3}$ rad s$^{-1}$ ; si le pixel a une taille angulaire $\theta_p$ = 35 $\mu$rad et si $t_e$ = 2.5 ms (cadence image de 400 Hz), alors on trouve Q $\leq$ 4,67, on pourra donc prendre Q = 4.

On en déduit P = N/Q. Si N/Q n'est pas entier, on prendra P = E(N/Q) + 1 où E désigne la partie entière, en acceptant que la dernière image accumulée résulte d'une accumulation sur un nombre d'images plus petit que Q, ce qui peut être pris en compte dans la détermination du seuil de détection. Par exemple, si N = 40 et Q = 6, on prendra P = 7, et on disposera de 6 images $I_p$ résultats d'une accumulation sur Q = 6 images élémentaires et d'une image $I_p$ résultat d'une accumulation sur Q=4 images élémentaires.

K est déterminé en fonction de la durée supposée de présence des artéfacts et de la cadence image multipliée par Q. Par exemple, pour Q = 4 et $t_e$ = 2,5 ms, la durée de chaque groupe d'images est de 10 ms (c'est le temps nécessaire pour obtenir une image accumulée), et donc P = 10. Si la durée maximale considérée pour la présence d'un artefact est inférieure à 10 ms, on prendra K = 2, en effet dans ce cas k ne pourra excéder 1 pour un artefact. Si la durée maximale est inférieure à 20 ms, on prendra K = 3 etc.

L'ensemble des pixels voisins déterminé au cours d'une phase dite d'association, est par exemple défini en prenant en compte le déplacement admissible de la cible dans les P groupes d'images. Il s'agit de déterminer à partir du pixel sélectionné dans le premier groupe d'images $I_p$ où l'étape de confirmation temporelle est réalisée, quels sont les pixels 'candidats au voisinage' pour les groupes d'images $I_p$ suivants.

Par exemple, en se basant sur les mêmes ordres de grandeur que ceux qui ont été définis précédemment (distance capteur-cible = 100 km, vitesse de la cible = 300 ms$^{-1}$ perpendiculairement à la ligne capteur-cible, taille angulaire du pixel $\theta_p$ = 35 $\mu$rad, $t_e$ = 2.5 ms), on a vu que la cible était susceptible de se déplacer de 1 pixel pour chaque

groupe d'images I$_p$, en fait légèrement moins car Q a été pris égal à 4 (qui est la partie entière de 4,67).

Dans ces conditions, on procède de la façon itérative suivante : on retient, autour du pixel sélectionné dans le premier groupe d'images Ip, une zone carrée Z de 3x3 pixels, puisque l'on sait que la cible peut se déplacer de un pixel à chaque groupe d'images et qu'on ne connaît pas a priori sa direction angulaire. Si dans le groupe d'images suivant, un pixel de Z a été sélectionné par le processus de détection, ce pixel sera retenu pour la suite ; dans le cas contraire, la zone Z pourra être agrandie (taille 5x5) pour le groupe d'images suivant et ainsi de suite jusqu'à la fin des P groupes d'images. A chaque fois qu'un pixel sélectionné est retenu, il est pris comme nouveau centre des zones à définir ultérieurement.

La méthode décrite pour définir l'ensemble des pixels voisins est un exemple de réalisation. D'autres modes de réalisation sont possibles, soit plus simples (sélection a priori d'une zone Z suffisamment grande autour du pixel sélectionné dans le premier groupe d'images, zone valable pour la totalité des P groupes d'images), soit plus sophistiqués, permettant de traiter les cas où deux cibles viennent interférer dans les mêmes voisinages.

Le critère de confirmation temporelle peut être complété par une étape complémentaire qui consiste à décider si l'ensemble des pixels voisins ainsi définis correspond bien à un objet dont le déplacement dans les P groupes d'images est conforme à ce que l'on attend d'une cible.

Pour cette étape complémentaire, on applique par exemple un critère de 'trajectoire' à l'ensemble des pixels retenus au cours de la phase d'association. En effet, celle-ci peut conduire à une trajectoire aberrante du type changement brutal de la direction du déplacement angulaire de la cible, correspondant à une accélération qui ne peut pas être celle d'une cible. Le critère applicable est par exemple que la trajectoire des pixels retenus soit suffisamment proche d'une droite.

Ce procédé permet :

- de prendre en compte dans le critère de confirmation temporelle, le déplacement potentiel de la cible dans des pixels voisins sélectionnés,
- d'augmenter les performances d'élimination des artefacts car d'une part ceux-ci n'ont pas plus de poids que les cibles lors de l'application du critère de confirmation temporelle et d'autre part les cibles ayant une corrélation temporelle supérieure à celle des artéfacts, l'application du critère élimine les artéfacts sans affaiblir la détection des cibles.

Par le critère de confirmation temporelle, le procédé permet également de rejeter les cibles dont le déplacement angulaire est trop rapide. En effet, Q est déterminé de manière à ce que la cible ne présente pas de changement de pixel entre les Q images, comme indiqué précédemment.

Un exemple de critère de confirmation temporelle est illustré figure 4 en considérant 3 cas différents, un cas par ligne du tableau. Chaque image I de ce tableau résulte d'une accumulation de Q images. Il y a P groupes d'images accumulées, un groupe par colonne du tableau ; dans cet exemple, P=4. On décide dans cet exemple de ne retenir que les cibles qui ne sont pas susceptibles de se déplacer de plus d'1 pixel dans P groupes d'images, par rapport à la position de la cible dans le premier groupe d'images où elle est détectée ; ceci est traduit sur la figure par une zone de recherche matérialisée par un carré qui couvre un pixel et ses voisins directs. Dans cet exemple la zone de recherche a une taille égale à 3x3.

Le nombre k de fois qu'un pixel ou l'un de ses voisins est extrait des P groupes d'images est :

k=4 pour la cible fixe (1$^{ère}$ ligne),
k=4 pour la cible à déplacement lent (2è ligne),
k=2 pour la cible à déplacement rapide (3è ligne),
k=3 pour la cible à déplacement erratique (4è ligne),
k=1 pour l'artefact (5è ligne).

Le critère de confirmation temporelle consiste à déterminer une valeur pour K, ici K=3 et à éliminer les images pour lesquelles k<K, en l'occurrence le cas de la cible trop mobile pour laquelle k=2 ainsi que celui de l'artefact pour lequel k=1.

Les différentes étapes du procédé de détection sont représentées figure 5 avec Q=6 et P= 4.

L'invention décrite jusqu'à présent effectue la détection de cibles qui n'occupent qu'un pixel. Une adaptation possible de l'invention permet de détecter les cibles de taille supérieure au pixel, par moyennage par blocs de l'image (dits 'nouveaux pixels') jusqu'à ramener les cibles que l'on veut détecter à n'occuper qu'un nouveau pixel.

Si par exemple l'on connaît seulement la taille maximale des cibles à détecter, on peut ainsi analyser consécutivement des images moyennées par blocs 2 x 2, 3 x 3,... jusqu'à p x p, ce qui revient à « dézoomer » l'image, c'est-à-dire à changer l'échelle du repère O,x,y de l'image : un bloc de q x q anciens pixels devient un nouveau pixel, q étant un entier supérieur ou égal à 2 et pouvant aller jusqu'au nombre p qui correspond à la taille maximale des cibles à détecter. Cette étape intervient avant de répartir les images en Q groupes d'images.

Le procédé décrit est typiquement mis en oeuvre dans un système de surveillance d'un secteur S qui comporte :

- des moyens de balayage 2 du secteur S dont la largeur angulaire A est balayée à une vitesse angulaire θ',
- des moyens 3 de formation d'images de scènes situées dans ledit secteur S et susceptibles de comporter des artéfacts,
- des moyens 4 de détection d'images numériques d'une scène, à une cadence f comprenant un détecteur matriciel 41 présentant un ensemble de pixels,
- une unité 5 de traitement des images détectées qui comprend des moyens de mise en oeuvre du procédé décrit.

Ces moyens de mise en oeuvre sont classiquement des moyens logiciels.

## Revendications

1. Procédé de détection d'un objet dans une scène située dans un secteur angulaire déterminé, et susceptible de comporter un ou plusieurs artéfacts, qui comprend une étape de balayage du secteur dont la largeur angulaire A est balayée à une vitesse angulaire θ', une étape d'acquisition d'images numériques de la scène à une cadence f au moyen d'un détecteur matriciel, ces images comportant des pixels et couvrant un champ de largeur angulaire instantané « a », comprenant les étapes suivantes de traitement des images acquises, par lot de N images consécutives avec N = afl θ':

   - répartir les N images en P groupes d'images, P étant un entier supérieur à 1,
   - pour chaque groupe p, p compris entre 1 et P, accumuler les images du groupe de manière à obtenir une image accumulée $I_p$,
   - pour chaque image $I_p$, sélectionner les pixels qui vérifient un critère de détection déterminé,

   et étant **caractérisé en ce qu'**il comprend l'étape suivante :

   - pour chaque image Ip comportant au moins un pixel sélectionné, dite image de départ de confirmation, effectuer une étape de confirmation temporelle qui comprend les sous-étapes suivantes :

      appliquer un critère de confirmation temporelle en comparant à un nombre prédéterminé K (on a K<= P), le nombre k de fois que ce pixel sélectionné dans l'image de départ ou l'un de ses voisins a été sélectionné dans les images $I_p$ suivantes, le pixel sélectionné dans l'image de départ étant compté dans k : ce pixel sera considéré comme celui d'un objet si k $\geq$ K,
      réitérer ce critère de confirmation temporelle pour tous les pixels sélectionnés de cette image de départ dans la mesure où ces pixels n'ont pas déjà été pris en compte dans un calcul de k.

2. Procédé selon la revendication précédente, **caractérisé en ce que** le nombre d'images de chaque groupe p est déterminé en fonction de la vitesse angulaire supposée de l'objet, de la taille de l'angle de visée du pixel et de la cadence image f du détecteur.

3. Procédé selon la revendication précédente, **caractérisé en ce que** le nombre d'images de chaque groupe p est en outre déterminé en fonction de N.

4. Procédé selon l'une des revendications précédentes, **caractérisé en ce que** P est déterminé en fonction de N et du nombre d'images de chaque groupe.

5. Procédé selon l'une des revendications précédentes, **caractérisé en ce que** K est déterminé en fonction de la durée supposée de présence des artéfacts et de la cadence image f.

6. Procédé selon l'une des revendications précédentes, **caractérisé en ce qu'**un pixel est sélectionné lorsque RSB > seuil prédéterminé.

7. Procédé selon l'une des revendications 1 à 5, **caractérisé en ce qu'**un pixel est sélectionné lorsque le signal du pixel est supérieur à un seuil prédéterminé.

**8.** Procédé selon l'une des revendications précédentes, **caractérisé en ce qu'**un pixel voisin est déterminé en fonction des déplacements admissibles de l'objet, d'une image $I_p$ à l'autre.

**9.** Procédé selon l'une des revendications précédentes, **caractérisé en ce qu'**un pixel voisin est déterminé en fonction d'une trajectoire de pixels admissible.

**10.** Procédé selon l'une des revendications précédentes, **caractérisé en ce que** l'image d'un objet couvrant plus d'un pixel, il comprend avant l'étape de répartition des N images en P groupes, une étape de changement de l'échelle des pixels c'est-à-dire qu'un bloc de q x q anciens pixels devient un nouveau pixel, q étant un entier supérieur ou égal à 2, de manière à ce que l'image d'un objet ne couvre qu'un pixel.

**11.** Procédé selon l'une des revendications précédentes, **caractérisé en ce que** la vitesse angulaire θ' est constante.

**12.** Système de surveillance d'un secteur S qui comporte :

- des moyens (2) de balayage du secteur S dont la largeur angulaire A est balayée à une vitesse angulaire θ',
- des moyens (3) de formation d'images de scènes situées dans ledit secteur S et susceptibles de comporter des artéfacts,
- des moyens (4) de détection d'images numériques d'une scène, à une cadence f comprenant un détecteur matriciel (41) présentant un ensemble de pixels,
- une unité(5) de traitement des images détectées,

**caractérisé en ce que** l'unité (5) de traitement comprend des moyens de mise en oeuvre du procédé selon les revendications précédentes.

**Claims**

**1.** A method for detecting an object in a scene that is situated in a determined angular sector S and that is susceptible to comprise one or more artefacts, which method comprises a step of scanning the sector along its angular width A at an angular speed θ', a step of acquiring consecutive digital images of the scene at a frequency f, said images comprising pixels and covering an 'instantaneous' field of angular width "a", comprising the following steps of processing the acquired images per batch of N images:

- accumulating images so as to obtain an accumulated image,
- selecting, for each accumulated image, the pixels that verify a determined detection criterion,

**characterised in that** N = a f / θ' and **in that** prior to the accumulation step it comprises the following step:

distributing the N images into P groups of images, P being an integer that is greater than 1, and **in that** the accumulation is applied for each group p, p being between 1 and P, the accumulated image being designated $I_p$, and **in that** after the accumulation step it comprises the following step:

- performing a time confirmation step for each image $I_p$ that comprises at least one selected pixel, referred to as the confirmation start image, which step comprises the following sub-steps:
- applying a time confirmation criterion by comparing with a predetermined number K, where K<=P, the number k of times that this pixel that is selected in the start image, or one in the vicinity thereof, has been selected in the following images $I_p$, the pixel selected in the start image being counted in k, which pixel will be considered to be that of an object if k ≥K,
- reiterating this time confirmation criterion for all of the selected pixels of this start image in so far as these pixels have not already been included in a calculation of k.

**2.** The method according to the preceding claim, **characterised in that** the number of images of each group p is determined as a function of the presumed angular speed of the object, of the size of the viewing angle of the pixel and of the image rate f of the detector.

**3.** The method according to the preceding claim, **characterised in that** the number of images of each group p is further determined as a function ofN.

4. The method according to any one of the preceding claims, **characterised in that** P is determined as a function ofN and of the number of images of each group.

5. The method according to any one of the preceding claims, **characterised in that** K is determined as a function of the presumed duration of the presence of the artefacts and of the image rate f.

6. The method according to any one of the preceding claims, **characterised in that** a pixel is selected when RSB is greater than a predetermined threshold.

7. The method according to any one of claims 1 to 5, **characterised in that** a pixel is selected when the signal of the pixel is greater than a predetermined threshold.

8. The method according to any one of the preceding claims, **characterised in that** an adjacent pixel is determined as a function of the admissible movements of the object, from one image $I_p$ to the other.

9. The method according to any one of the preceding claims, **characterised in that** an adjacent pixel is determined as function of a trajectory of admissible pixels.

10. The method according to any one of the preceding claims, **characterised in that** when the image of an object covers more than one pixel, and before the step of distributing the N images into P groups, it comprises a step of changing the scale of the pixels, that is that a block of q x q old pixels becomes a new pixel, q being an integer that is greater than or equal to 2, so that the image of an object covers only one pixel.

11. The method according to any one of the preceding claims, **characterised in that** the angular speed θ' is constant.

12. A system for monitoring a sector S that comprises:

   - means (2) for scanning the sector S, the angular length A of which is scanned at an angular speed θ',
   - means (3) for forming images of scenes that are situated in said sector S and that are susceptible to comprise artefacts,
   - means (4) for detecting digital images of the scene, at a rate f comprising a matrix detector (41) having a set of pixels,
   - a unit (5) for processing the detected images,

   **characterised in that** the processing unit (5) comprises means for implementing the method according to the preceding claims.

**Patentansprüche**

1. Verfahren zum Erkennen eines Objekts in einer Szene, die sich in einem bestimmten Winkelsektor S befindet und dazu neigt, ein oder mehrere Artefakte zu umfassen, wobei das Verfahren einen Schritt des Abtastens des Sektors über seine Winkelbreite A mit einer Winkelgeschwindigkeit θ', einen Schritt des Erfassens aufeinander folgender digitaler Bilder der Szene mit einer Frequenz f beinhaltet, wobei diese Bilder Pixel umfassen und ein 'momentanes' Feld mit der Winkelbreite "a" abdecken, wobei das Verfahren die folgenden Schritte zum Verarbeiten der erfassten Bilder pro Satz von N Bildern beinhaltet:

   - Akkumulieren von Bildern, um ein akkumuliertes Bild zu erhalten,
   - Wählen der Pixel, die ein vorbestimmtes Erkennungskriterium erfüllen, für jedes akkumulierte Bild,

   **dadurch gekennzeichnet, dass** N = a f / θ' ist, und dadurch, dass das Verfahren vor dem Akkumulationsschritt den folgenden Schritt beinhaltet:

   Verteilen der N Bilder in P Gruppen von Bildern, wobei P eine ganze Zahl größer als 1 ist, und dadurch, dass das Akkumulieren für jede Gruppe p angewendet wird, wobei p zwischen 1 und P liegt, wobei das akkumulierte Bild mit $I_p$ bezeichnet wird, und dadurch, dass das Verfahren nach dem Akkumulationsschritt den folgenden Schritt beinhaltet:

- Ausführen eines Zeitbestätigungsschrittes für jedes Bestätigungsanfangsbild genannte Bild I$_p$, das wenigstens ein gewähltes Pixel beinhaltet, wobei der Schritt die folgenden Unterschritte beinhaltet:
- Anwenden eines Zeitbestätigungskriteriums durch Vergleichen mit einer vorbestimmten Zahl K, wobei K<-P ist, der Anzahl k von Malen, dass dieses in dem Anfangsbild oder einem seiner Nachbarn gewählte Pixel in den folgenden Bildern I$_p$ gewählt wird, wobei das in dem Anfangsbild gewählte Pixel in k gezählt wird, wobei dieses Pixel als das eines Objekts angesehen wird, wenn k ≥K ist,
- Wiederholen dieses Zeitbestätigungskriteriums für alle gewählten Pixel dieses Anfangsbildes, sofern diese Pixel nicht bereits in einer Berechnung von k enthalten sind.

2. Verfahren nach dem vorherigen Anspruch, **dadurch gekennzeichnet, dass** die Anzahl von Bildern jeder Gruppe p in Abhängigkeit von der angenommenen Winkelgeschwindigkeit des Objekts, der Größe des Betrachtungswinkels des Pixels und der Bildrate f des Detektors ermittelt wird.

3. Verfahren nach dem vorherigen Anspruch, **dadurch gekennzeichnet, dass** die Anzahl von Bildern jeder Gruppe p ferner in Abhängigkeit von N ermittelt wird.

4. Verfahren nach einem der vorherigen Ansprüche, **dadurch gekennzeichnet, dass** P in Abhängigkeit von N und von der Zahl von Bildern jeder Gruppe ermittelt wird.

5. Verfahren nach einem der vorherigen Ansprüche, **dadurch gekennzeichnet, dass** K in Abhängigkeit von der angenommenen Dauer der Anwesenheit der Artefakte und der Bildrate f ermittelt wird.

6. Verfahren nach einem der vorherigen Ansprüche, **dadurch gekennzeichnet, dass** ein Pixel dann gewählt wird, wenn RSB größer als ein vorbestimmter Schwellenwert ist.

7. Verfahren nach einem der Ansprüche 1 bis 5, **dadurch gekennzeichnet, dass** ein Pixel dann gewählt wird, wenn das Signal des Pixels größer ist als ein vorbestimmter Schwellenwert.

8. Verfahren nach einem der vorherigen Ansprüche, **dadurch gekennzeichnet, dass** ein Nachbarpixel in Abhängigkeit von den zulässigen Bewegungen des Objekts von einem Bild I$_p$ zum anderen ermittelt wird.

9. Verfahren nach einem der vorherigen Ansprüche, **dadurch gekennzeichnet, dass** ein Nachbarpixel in Abhängigkeit von einem Pfad von zulässigen Pixeln ermittelt wird.

10. Verfahren nach einem der vorherigen Ansprüche, **dadurch gekennzeichnet, dass** das Verfahren, wenn das Bild eines Objekts mehr als ein Pixel abdeckt, vor dem Schritt des Verteilens der N Bilder auf P Gruppen einen Schritt des Änderns der Skala der Pixel beinhaltet, das heißt dass ein Block von q x q alten Pixeln zu einem neuen Pixel wird, wobei q eine ganze Zahl gleich oder größer als 2 ist, so dass das Bild eines Objekts nur ein Pixel abdeckt.

11. Verfahren nach einem der vorherigen Ansprüche, **dadurch gekennzeichnet, dass** die Winkelgeschwindigkeit θ' konstant ist.

12. System zum Überwachen eines Sektors S, das Folgendes umfasst:

- Mittel (2) zum Abtasten des Sektors S, dessen Winkelbreite A mit einer Winkelgeschwindigkeit θ' abgetastet wird,
- Mittel (3) zum Bilden von Bildern von Szenen, die sich in dem genannten Sektor S befinden und dazu neigen, Artefakte zu enthalten,
- Mittel (4) zum Erkennen von digitalen Bildern einer Szene mit einer Rate f, die einen Matrixdetektor (41) mit einem Satz von Pixeln umfasst,
- eine Einheit (5) zum Verarbeiten der erkannten Bilder,

**dadurch gekennzeichnet, dass** die Verarbeitungseinheit (5) Mittel zum Implementieren des Verfahrens nach einem der vorherigen Ansprüche umfasst.

**FIG.1**

Q images accumulées

**FIG.4**

FIG.2

FIG.3

FIG.5

**EP 2 294 441 B1**

## RÉFÉRENCES CITÉES DANS LA DESCRIPTION

**Documents brevets cités dans la description**

- GB 2330028 A

- US 5210798 A